# EUROPÄISCHE PATENTSCHRIFT

(11) **EP 0 636 636 B1**
(45) Veröffentlichungstag und Bekanntmachung des Hinweises auf die Patenterteilung: **26.02.1997**
(21) Anmeldenummer: 94111341.7
(22) Anmeldetag: 21.07.1994
(51) Int. Cl.: C08F 10/02, C08F 2/34

(54) **Verfahren zur Herstellung von Homopolymerisaten oder Copolymerisaten des Ethylens**
Process for producing ethylene homopolymers or copolymers
Procédé pour la préparation d'homopolymères ou de copolymères de l'éthylène

(30) Priorität: 31.07.1993 DE 4325824
(43) Veröffentlichungstag der Anmeldung: 01.02.1995
(73) Patentinhaber: BASF Aktiengesellschaft, 67063 Ludwigshafen (DE)
(72) Erfinder: Lux, Martin, Dr., D-67125 Dannstadt-Schauernheim (DE); Funk, Guido, Dr., D-67549 Worms (DE); Saive, Roland, Dr., D-67071 Ludwigshafen (DE); Goertz, Hans-Helmut, Dr., D-67251 Freinsheim (DE); Konrad, Rainer, Dr., D-67161 Goennheim (DE)

(56) Entgegenhaltungen:
- EP-A- 0 005 215
- EP-A- 0 453 116
- DE-A- 3 543 360

## Beschreibung

Die vorliegende Erfindung betrifft ein Verfahren zur Herstellung von Homopolymerisaten des Ethylens oder Copolymerisaten des Ethylens mit untergeordneten Mengen anderer C₃- bis C₁₂-Alk-1-ene durch katalytische Polymerisation in einer Suspension oder in der Gasphase in Gegenwart eines Antistatikums bei einer Temperatur von 50 bis 120°C sowie einem Druck von 5 bis 50 bar.

Weiterhin betrifft die vorliegende Erfindung ein Antistatikum.

Verfahren zur Herstellung von Polymerisaten des Ethylens in der Gasphase oder in einer Suspension sind bereits in zahlreichen Publikationen beschrieben (US-A 4 012 573, US-A 4 427 573, EP-A 110 087, EP-A 230 019, EP-A 260 647, GB-A 841 263).

Weiterhin ist bekannt, bei derartigen Polymerisationsverfahren in Gegenwart von sogenannten Antistatika zu arbeiten, um die unerwünschte Belagbildung von Polymerisaten an der Reaktorwand zu verhindern (US-A 3 919 185, US-A 4 182 810, US-A 4 532 311, US-A 5 026 795, DE-A 3 543 360, EP-A 107 127, EP-A 229 368, EP-A 232 701). Die Ursache einer derartigen Belagbildung ist vor allem darin zu sehen, daß sich die entstehenden Polymerisate während der Polymerisation elektrostatisch aufladen können, was zu einer Adhäsion dieser Polymerisate an der Reaktorwand, führen kann. Als Folge dieser Belagbildung beobachtet man u.a. eine Verringerung des Wärmeabfuhrvermögens der Reaktorwand und eine Reduzierung der Polymerisationskapazität im Reaktor und schließlich das Zusammenschmelzen der im Reaktor vorliegenden Polymerisate, welches den Abbruch der Polymerisation notwendig macht.

Mit Hilfe der bisher bekannten Verfahren zum Einsatz von Antistatika bei Polymerisationsprozessen läßt sich zwar die Belagbildung an der Wand des Reaktors wirkungsvoll unterdrücken, wodurch dessen negativen Folgen vermieden werden können, indes zeigen diese Verfahren immer noch einige Nachteile. Dazu zählen u.a. der negative Einfluß größerer Mengen Antistatika auf die Produktivität des Katalysators, was zur Folge hat, daß teilweise nur sehr niedrige Katalysatorausbeuten erzielt werden können. Darüber hinaus lassen sich bei Mitverwendung von Antistatika häufig keine Polymerisate des Ethylens mit hohen Schüttdichten herstellen.

Der vorliegenden Erfindung lag daher als Aufgabe die Entwicklung eines neuen Verfahrens zur Verhinderung der Belagbildung an der Reaktorwand zugrunde, durch welches die bisherigen Nachteile vermieden werden können und welches insbesondere auch die Herstellung von Polymerisaten des Ethylens mit hohen Schüttdichten möglich macht.

Demgemäß wurde ein Verfahren zur Herstellung von Homopolymerisaten des Ethylens oder Copolymerisaten des Ethylens mit untergeordneten Mengen anderer C₃- bis C₁₂-Alk-1-ene durch katalytische Polymerisation in einer Suspension oder in der Gasphase in Gegenwart eines Antistatikums bei einer Temperatur von 50 bis 120°C sowie einem Druck von 5 bis 50 bar gefunden, welches dadurch gekennzeichnet ist, daß als Antistatikum ein Gemisch aus folgenden Substanzen eingesetzt wird,
a) einem Metallsalz der Medialansäure der Formel (I) 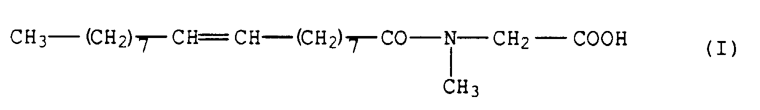
b) einem Metallsalz einer Anthranilsäure der allgemeinen Formel (II), 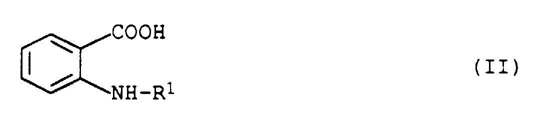 wobei der organische Rest R¹ entweder für
   α)

      -CO-(CH₂)_{ₓ}-CH₃ (IIIα)

      oder für
   β)

      -CO-(CH₂)_{y}-CH=CH-(CH₂)_{z}-CH₃ (IIIβ)
   steht, wobei x, y und z jeweils eine ganze Zahl bedeuten und im Bereich von 6 bis 18 für x, 1 bis 16 für y, 1 bis 16 für z und 4 bis 17 für y + z liegen,
   und
c) einem Polyamin, erhältlich durch Umsetzung von Epichlorhydrin und einem aliphatischen primären Monoamin oder einem N-Alkylalkylendiamin der allgemeinen Formel (IV)

   R²NH-R³-NH₂ (IV),

   wobei
   - R²: für einen C₈-C₂₄-Alkylrest und
   - R³: für einen C₂-C₆-Alkylenrest steht.

Als Metallsalz a) der Medialansäure der Formel (I) werden dabei insbesondere die Salze von Metallen der ersten und der zweiten Hauptgruppe des Periodensystems verwendet. Besonders bevorzugt ist dabei das Calciumsalz der Medialansäure der Formel (I).

Als Metallsalze b) der Anthranilsäure der allgemeinen Formel (II) werden insbesondere die Salze der ersten und zweiten Hauptgruppe sowie die der vierten bis achten Nebengruppe des Periodensystems verwendet. Besonders bevorzugt ist dabei das Salz des dreiwertigen Chroms der Anthranilsäure der allgemeinen Formel (II).

Bevorzugte Vertreter der Anthranilsäure weisen einen solchen Rest R¹ der allgemeinen Formel (IIIα) auf, in welchem x für eine ganze Zahl im Bereich von 10 bis 16 steht, insbesondere für die Zahlen 14 und 16. Dabei handelt es sich bei R¹ insbesondere um den Säurerest der Palmitinsäure (x = 14) sowie den Säurerest der Stearinsäure (x = 16).

Weiter bevorzugte Vertreter der Anthranilsäure sind u.a. solche Verbindungen der allgemeinen Formel (IIIβ), in welchen y für eine ganze Zahl im Bereich von 4 bis 12, z für eine ganze Zahl im Bereich von 4 bis 12 und die Summe y + z für eine ganze Zahl im Bereich von 8 bis 16 steht. Dabei wird für R¹ insbesondere der Säurerest der Ölsäure eingesetzt, welcher in der allgemeinen Formel (IIIβ) für y und z jeweils die Zahl 7 und für y + z die Zahl 14 aufweist.

Als Polyamin c) verwendet man nach dem erfindungsgemäßen Verfahren insbesondere das Reaktionsprodukt aus Epichlorhydrin und einem solchen aliphatischen primären Monoamin, welches als aliphatischen Rest einen C₈-C₂₄-Alkylrest, insbesondere einen C₁₀-C₂₀-Alkylrest aufweist. Beispiele für besonders geeignete aliphatische primäre Monoamine sind u.a. Decylamin, Dodecylamin, Tridecylamin und Tetradecylamin.

Weitere bevorzugte Polyamine c) sind erhältlich durch Umsetzung von Epichlorhydrin mit einem N-Alkylalkylendiamin der allgemeinen Formel (IV), in welchem R² insbesondere für einen C₁₂- bis C₁₈-Alkylrest und R³ für einen C₃-Alkylenrest steht. Besonders bevorzugte Polyamine c) sind erhältlich ausgehend von N-Talg-1,3-diaminopropan durch dessen Umsetzung mit Epichlorhydrin im Molverhältnis 1 : 1,5. Eine derartige Umsetzung ist dem in der Kunststofftechnik kundigen Fachmann geläufig. Derartige Polyamine c) werden u.a. auch unter dem Handelsnamen Polyflo® 130 von der Firma UOP, Des Plains, Illinois, USA, vertrieben.

Die Herstellung der Metallsalze a) und b) erfolgt ebenfalls nach üblichen Methoden der synthetischen Chemie, die dem durchschnittlichen Fachmann geläufig sind.

Vorzugsweise werden im antistatischen Gemisch die Metallsalze a) und b) in solchen Mengenverhältnissen verwendet, daß das Gewichtsverhältnis zwischen dem Metallsalz der Medialansäure a) und dem Metallsalz der Anthranilsäure b) im Bereich von 1 : 0,1 bis 1 : 2,0, vorzugsweise im Bereich von 1 : 0,3 bis 1 : 0,6 liegt. Weiterhin werden die Metallsalze a) und b) nach dem erfindungsgemäßen Verfahren in solchen Mengen als antistatisches Gemisch verwendet, daß das Gewichtsverhältnis zwischen dem Metallsalz der Medialansäure a) und dem Metallsalz der Anthranilsäure b) einerseits und dem Polyamin c) andererseits im Bereich von 1 : 0,1 bis 1 : 2,0, insbesondere im Bereich von 1 : 0,2 bis 1 : 1 liegt.

Nach dem erfindungsgemäßen Verfahren können die Bestandteile a), b) und c) des antistatischen Gemisches entweder in reiner Form, vorgemischt oder einzeln, oder aber in Form von einer oder von mehreren Lösungen in den Polymerisationsreaktor gegeben werden. Nach einem bevorzugten Verfahren wird das antistatische Gemisch in Form einer 0,05- bis 50 gew.-%igen Lösung in aliphatischen oder aromatischen Kohlenwasserstoffen, beispielsweise in Hexan, Heptan, Hex-1-en oder Toluol in den Reaktor eingebracht. Üblicherweise werden dabei zur Herstellung von 1 000 000 Gew.-Teilen Homo- oder Copolymerisat des Ethylens 0,5 bis 50 Gew.-Teile, insbesondere 1 bis 20 Gew.-Teile des antistatischen Gemisches aus a), b) und c) eingesetzt.

Das erfindungsgemäße Verfahren zur Herstellung von Homopolymerisaten des Ethylens oder Copolymerisaten des Ethylens mit untergeordneten Mengen anderer C₃- bis C₁₂-Alk-1-ene kann sowohl in einer Suspension als auch in der Gasphase in üblichen Polymerisationsreaktoren durchgeführt werden. Unter Copolymerisaten des Ethylens mit untergeordneten Mengen anderer C₃- bis C₁₂-Alk-1-enen sollen dabei bis zu 40 Gew.-%, insbesondere bis zu 30 Gew.-% einpolymerisierte C₃- bis C₁₂-Alk-1-ene verstanden werden, beispielsweise Propylen, But-1-en, Pent-1-en, 4-Methyl-pent-1-en, Hex-1-en, Hept-1-en oder Oct-1-en, sowie Gemische aus diesen C₃- bis C₁₂-Alk-1-enen. Das Verfahren kann dabei sowohl kontinuierlich als auch diskontinuierlich, im gerührten oder im gewirbelten Festbett bei Temperaturen von 50 bis 120°C, insbesondere von 90 bis 120°C und Drücken von 5 bis 50 bar, insbesondere von 20 bis 40 bar durchgeführt werden.

Das erfindungsgemäße Verfahren wird üblicherweise mit Hilfe von titan- und aluminiumhaltigen Ziegler-Katalysatoren oder durch Phillips-Katalysatoren auf der Basis von chromhaltigen Verbindungen durchgeführt, wobei Phillips-Katalysatoren bevorzugt verwendet werden. Beispiele für besonders geeignete Phillips-Katalysatoren sind u.a. aus der EP-A 429 937 und der DE-A 41 32 894 bekannt. Bei diesen Phillips-Katalysatoren verwendet man üblicherweise Chromtrioxid, welches auf einem metallischen Träger aufgebracht ist.

Mit Hilfe des erfindungsgemäßen Verfahrens unter Einsatz des ebenfalls erfindungsgemäßen antistatischen Gemisches ist es möglich, hohe Katalysatorproduktivitäten zu erzielen, ohne daß dabei eine Beeinträchtigung der antistatischen Wirkung beobachtet wird. Die erhaltenen Polymerisate des Ethylens weisen u.a. eine sehr hohe Schüttdichte auf. Ihre Schmelzflußindizes (HLMI), gemessen bei 190^{o}C und unter einer Auflage von 21,6 kp nach DIN 53 735 liegen im Bereich von 1,0 bis 200, insbesondere im Bereich von 1,5 bis 50 g/10 min.

### Beispiele

### Erfindungsgemäße Beispiele 1a-c

Die Polymerisation von Ethylen erfolgte in einem Schleifenreaktor mit einem Volumen von 6 m³ des Typs, wie er in der US-A 3 242 150 beschrieben ist, in einer Suspension. Als Suspensionsmittel wurde iso-Butan eingesetzt.

Die Menge an Ethylen im Reaktionsgemisch wurde konstant bei 14,7 Mol Ethylen pro 100 Mol der im Reaktionsgemisch enthaltenen Gesamtmolmenge von iso-Butan und monomerem Ethylen gehalten.

Die Polymerisatkonzentration im Reaktionsgemisch betrug 41 kg Polymerisat pro 100 kg Reaktionsgemisch.

Es wurde ein handelsüblicher Phillips-Katalysator der Firma Grace/Worms (Typ 967BWFl) eingesetzt, der bei 580°C zuvor im Luftstrom 10 Stunden lang aktiviert wurde und einen Chromgehalt von 1 Gew.-% aufwies. Dieser bestand im wesentlichen aus 6-wertigem Chrom und einem metalloxidischen Träger. Die Menge des in den Reaktor dosierten Katalysators wurde so gewählt, daß sich bei unterschiedlichen Antistatikummengen ein konstanter Reaktorausstoß von 900 kg Polyethylen/Stunde ergab (vgl. Tabelle Beispiele 1a-c). Das Antistatikum bestand aus einem Gemisch aus (a) 1 Gewichtsteil des Calciumsalzes der Medialansäure, (b) 0,45 Gew.-Teilen des Chromsalzes der Oleoylanthranilsäure und (c) 0,7 Gew.-Teilen eines Umsetzungsprodukts von N-Talg-1,3-diaminopropan und Epichlorhydrin im Molverhältnis 1 : 1,5.

Stündlich wurden
- - im Beispiel 1a: 7,2 g Antistatikum, d.h. 8 Gew.-Teile Antistatikum, bezogen auf 1 000 000 Gew.-Teile produziertes Polyethylen,
- - im Beispiel 1b: 3,6 g Antistatikum, d.h. 4 Gew.-Teile Antistatikum, bezogen auf 1 000 000 Gew.-Teile produziertes Polyethylen und
- - im Beispiel 1c: 1,8 g Antistatikum, d.h. 2 Gew.-Teile Antistatikum, bezogen auf 1 000 000 Gew.-Teile produziertes Polyethylen

in Form einer 1,4 gew.-%igen Lösung in n-Heptan dem Reaktor zudosiert.

Auch in Gegenwart relativ niedriger Antistatikumsanteile bildeten sich im Reaktor bei mehrtägiger Polymerisation keine Reaktorwandbeläge.

In der nachfolgenden Tabelle sind für die erfindungsgemäßen Beispiele 1 a-c die Menge des eingesetzten Antistatikums, die Polymerisationstemperatur sowie die Katalysatorproduktivität aufgeführt. Weiterhin enthält diese Tabelle u.a. den Schmelzflußindex und die Schüttdichte der erhaltenen Polymerisate des Ethylens.

### Vergleichsbeispiele 2 a-c

Es wurde gearbeitet wie in den Beispielen 1 a-c mit der Ausnahme, daß gemäß der DE-A 35 43 360 im Antistatikum der Bestandteil (c), d.h. das Umsetzungsprodukt von N-Talg-1,3-diaminopropan und Epichlorhydrin, nicht eingesetzt wurde.

Die Herstellung eines Homopolymerisats mit einem Schmelzflußindex von HLMI = 2,0 ± 0,1 g/10 min war nur bis zu Antistatikumsmengen von 8 Gew. -Teilen (bezogen auf 1 000 000 Gew.-Teile Polyethylen) störungsfrei möglich. Bei 4 Gew.-Teilen Antistatikum traten bereits nach wenigen Stunden Betrieb unregelmäßige Störungen durch Ablagerungen an den Reaktorwänden auf. Mit 2 Gew.-Teilen Antistatikum mußte die Polymerisation bereits nach 0,5 Stunden wegen Reaktorwandbelägen abgebrochen werden. Hohe Polyethylenschüttdichten und gute Katalysatorproduktivitäten wie beim erfindungsgemäßen Arbeiten (Beispiel 1c) konnten nicht erreicht werden.

In der nachfolgenden Tabelle sind für die Vergleichsbeispiele 2 a-c die Menge des eingesetzten Antistatikums, die Polymerisationstemperatur sowie die Katalysatorproduktivität aufgeführt. Weiterhin enthält diese Tabelle u.a. den Schmelzflußindex und die Schüttdichte der erhaltenen Polymerisate des Ethylens.

### Vergleichsbeispiele 3 a-c

Es wurde gearbeitet wie in den Beispielen 1 a-c beschrieben mit der Ausnahme, daß gemäß der Lehre der US-A 4 182 810 das Antistatikum Stadis® 450 (Handelsprodukt der Firma DuPont, USA) eingesetzt wurde. Stadis® 450 enthielt vergleichbare Mengen des Umsetzungsproduktes aus Epichlorhydrin und N-Talg-1,3-diaminopropan wie das erfindungsgemäße Antistatikum, aber kein Calciumsalz der Medialansäure und kein Chromsalz der Oleoylanthranilsäure.

Bei Antistatikamengen von bis zu 4 Gew.-Teilen, bezogen auf 1 000 000 Gew.-Teile Polyethylen konnte dieses noch störungsfrei hergestellt werden. Bei Antistatikamengen von 2 Gew.-Teilen pro 1 000 000 Gew.-Teile Polyethylen trat bereits nach wenigen Stunden Brockenbildung auf und nach einem Tag mußte die Polymerisation wegen Wandbelägen am Reaktor abgebrochen werden.

Hohe Polyethylenschüttdichten und gute Katalysatorproduktivitäten wie beim erfindungsgemäßen Arbeiten (beispielsweise nach dem Beispiel 1c) konnten auf diese Weise nicht erreicht werden.

In der nachfolgenden Tabelle sind für die Vergleichsbeispiele 3 a-c die Menge des eingesetzten Antistatikums, die Polymerisationstemperatur sowie die Katalysatorproduktivität aufgeführt. Weiterhin enthält diese Tabelle u.a. den Schmelzflußindex und die Schüttdichte der erhaltenen Polymerisate des Ethylens.

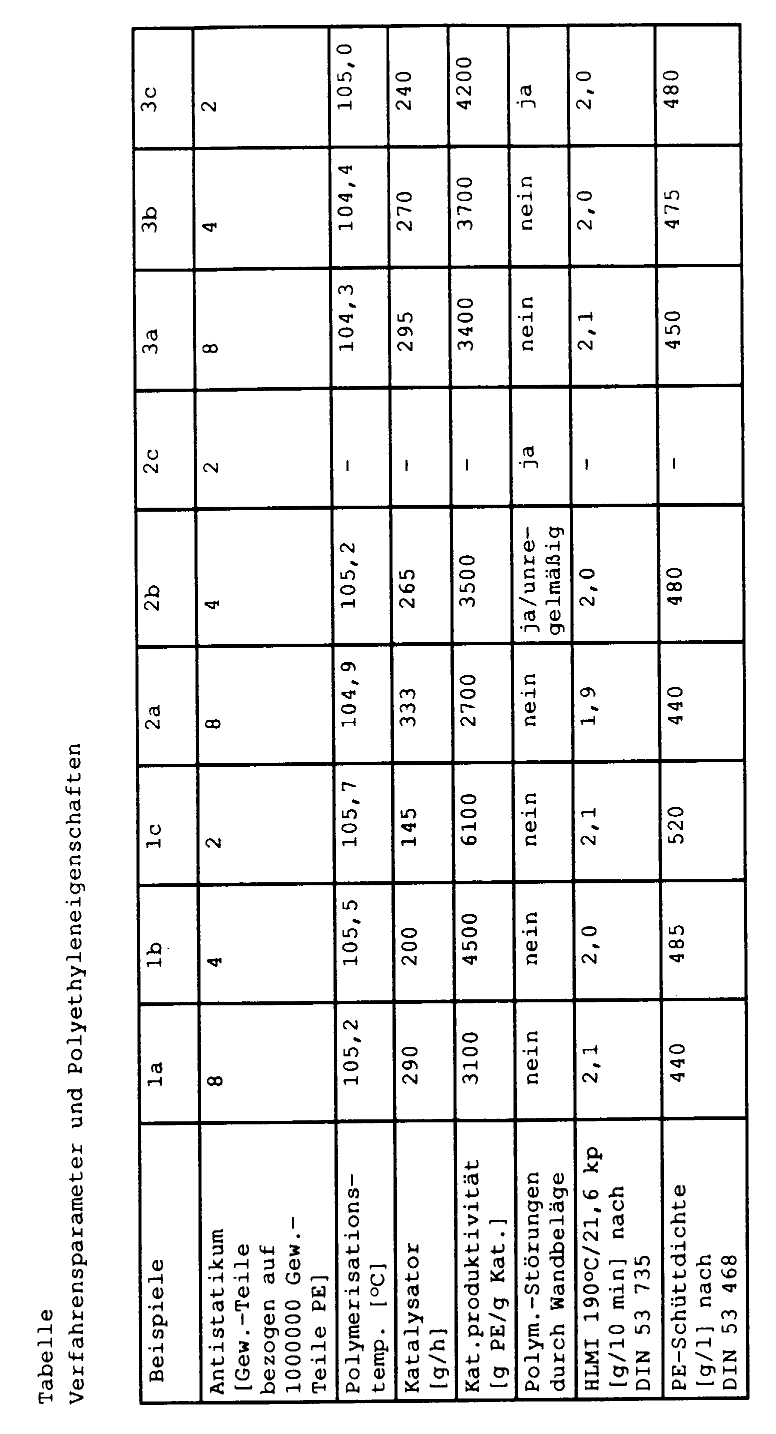

## Patentansprüche

1. Verfahren zur Herstellung von Homopolymerisaten des Ethylens oder Copolymerisaten des Ethylens mit untergeordneten Mengen anderer C₃- bis C₁₂-Alk-1-ene durch katalytische Polymerisation in einer Suspension oder in der Gasphase in Gegenwart eines Antistatikums bei einer Temperatur von 50 bis 120°C sowie einem Druck von 5 bis 50 bar, dadurch gekennzeichnet, daß als Antistatikum ein Gemisch aus folgenden Substanzen eingesetzt wird,
a) einem Metallsalz der Medialansäure der Formel (I) 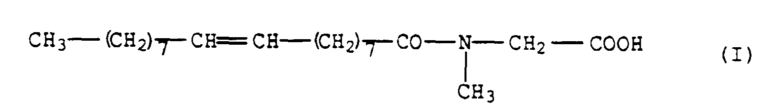
b) einem Metallsalz einer Anthranilsäure der allgemeinen Formel (II), 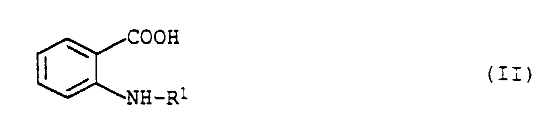 wobei der organische Rest R¹ entweder für
α)
-CO-(CH₂)_{ₓ}-CH₃ (IIIα)
oder für
β)
-CO-(CH₂)_{y}-CH=CH-(CH₂)_{z}-CH₃ (IIIβ)
steht, wobei x, y und z jeweils eine ganze Zahl bedeuten und im Bereich von 6 bis 18 für x, 1 bis 16 für y, 1 bis 16 für z und 4 bis 17 für y + z liegen,
und
c) einem Polyamin, erhältlich durch Umsetzung von Epichlorhydrin mit einem aliphatischen primären Monoamin oder einem N-Alkylalkylendiamin der allgemeinen Formel (IV)
R²NH-R³-NH₂ (IV),
wobei
R² für einen C₈-C₂₄-Alkylrest und
R³ für einen C₂-C₆-Alkylenrest steht und
wobei das Metallsalz der Medialansäure a), das Metallsalz der Anthranilsäure b) und das Polyamin c) in solchen Mengenverhältnissen verwendet werden, daß das Gewichtsverhältnis zwischen a) und b) einerseits und c) andererseits im Bereich von 1 : 0,1 bis 1 : 2,0 liegt.

2. Verfahren nach Anspruch 1, wobei ais Metallsalz a) der Medialansäure der Formel (I) das entsprechende Calciumsalz verwendet wird.

3. Verfahren nach den Ansprüchen 1 oder 2, wobei als Metallsalz b) der Anthranilsäure der allgemeinen Formel (II) das entsprechende Salz des dreiwertigen Chroms verwendet wird.

4. Verfahren nach den Ansprüchen 1 bis 3, wobei als organischer Rest R¹ im Metallsalz der Anthranilsäure der allgemeinen Formel (II) ein organischer Rest der Formel (IIIβ) verwendet wird, in welchem y und z jeweils für die Zahl 7 stehen.

5. Verfahren nach den Ansprüchen 1 bis 4, wobei als Polyamin c) das Reaktionsprodukt der Umsetzung von Epichlorhydrin und einem solchen N-Alkylalkylendiamin der allgemeinen Formel (IV) verwendet wird, in welchem R² für einen C₁₂-C₁₈-Alkylrest und R³ für einen C₃-Alkylenrest steht.

6. Verfahren nach den Ansprüchen 1 bis 5, wobei das Metallsalz der Medialansäure a) und das Metallsalz der Anthranilsäure b) in solchen Mengenverhältnissen verwendet werden, daß das Gewichtsverhältnis zwischen a) und b) im Bereich von 1 : 0,1 bis 1 : 2,0 liegt.

7. Verfahren nach den Ansprüchen 1 bis 6, wobei das Metallsalz der Medialansäure a), das Metallsalz der Anthranilsäure b) und das Polyamin c) in solchen Mengenverhältnissen verwendet werden, daß das Gewichtsverhältnis zwischen a) und b) einerseits und c) andererseits im Bereich von 1 : 0,2 bis 1 : 1 liegt.

8. Verfahren nach den Ansprüchen 1 bis 7, wobei das Antistatikum aus den Substanzen a), b) und c) in solchen Mengen verwendet wird, daß auf 1 000 000 Gew.-Teile Homo- oder Copolymerisat des Ethylens 0,5 bis 50 Gew.-Teile des Antistatikums fallen.

9. Verfahren nach den Ansprüchen 1 bis 8, wobei die Polymerisation mit Hilfe eines üblichen Phillips-Katalysators durchgeführt wird.

10. Antistatikum, enthaltend als wirksame Substanzen ein Gemisch aus
a) einem Metallsalz der Medialansäure der Formel (I) 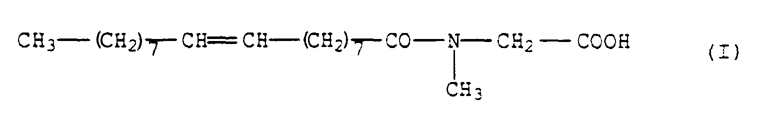
b) einem Metallsalz einer Anthranilsäure der allgemeinen Formel (II), 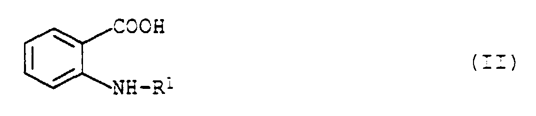 wobei der organische Rest R¹ entweder für
α)
-CO-(CH₂)_{ₓ}-CH₃ (IIIα)
oder für
β)
-CO-(CH₂)_{y}-CH=CH-(CH₂)_{z}-CH₃ (IIIβ)
steht, wobei x, y und z jeweils eine ganze Zahl bedeuten und im Bereich von 6 bis 18 für x, 1 bis 16 für y, 1 bis 16 für z und 4 bis 17 für y + z liegen,
und
c) einem Polyamin, erhältlich durch Umsetzung von Epichlorhydrin mit einem aliphatischen primären Monoamin oder einem N-Alkylalkylendiamin der allgemeinen Formel (IV)
R²NH-R³-NH₂ (IV),
wobei
R² für einen C₈-C₂₄-Alkylrest und
R³ für einen C₂-C₆-Alkylenres steht und
wobei das Metallsalz der Medialansäure a), das Metallsalz der Anthranilsäure b) und das Polyamin c) in solchen Mengenverhältnissen verwenden werden, daß das Gewichtsverhältnis zwischen a) und b) einerseits und c) andererseits im Bereich von 1: 0,1 bis 1 : 2,0 liegt.

## Claims

1. A process for the preparation of homopolymers of ethylene or copolymers of ethylene with minor amounts of other C₃-C₁₂-alk-1-enes by catalytic polymerization in a suspension or in the gas phase in the presence of an antistatic agent at from 50 to 120°C and from 5 to 50 bar, wherein the antistatic agent used is a mixture of the following substances:
a) a metal salt of medialanic acid of the formula (I) 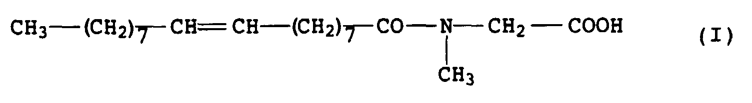
b) a metal salt of an anthranilic acid of the formula (II) 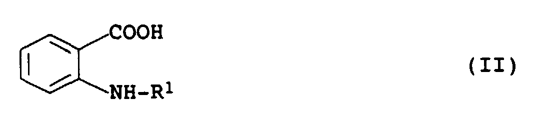 where the organic radical R¹ is either
α)
-CO-(CH₂)_{ₓ}-CH₃ (IIIα)
or
β)
-CO-(CH₂)_{y}-CH=CH-(CH₂)_{z}-CH₃ (IIIβ)
and x, y and z are each an integer and are from 6 to 18 for x, from 1 to 16 for y, from 1 to 16 for z and from 4 to 17 for y + z,
and
c) a polyamine obtainable by reacting epichlorohydrin and an aliphatic primary monoamine or an N-alkylalkylenediamine of the formula (IV)
R²NH-R³-NH₂ (IV),
where
R² is C₈-C₂₄-alkyl and
R³ is C₂-C₆-alkylene, and
wherein the metal salt of medialanic acid a), the metal salt of anthranilic acid b) and the polyamine c) are used in a weight ratio of a) and b) on the one hand to c) on the other hand of from 1:0.1 to 1:2.0.

2. A process as claimed in claim 1, wherein the corresponding calcium salt is used as metal salt a) of medialanic acid of the formula (I).

3. A process as claimed in claim 1 or 2, wherein the corresponding salt of trivalent chromium is used as metal salt b) of anthranilic acid of the formula (II).

4. A process as claimed in any of claims 1 to 3, wherein an organic radical of the formula (IIIβ), where y and z are each 7, is used as the organic radical R¹ in the metal salt of anthranilic acid of the formula (II).

5. A process as claimed in any of claims 1 to 4, wherein the reaction product of epichlorohydrin and an N-alkylalkylenediamine of the formula (IV), where R² is C₁₂-C₁₈-alkyl and R³ is C₃-alkylene, is used as polyamine c).

6. A process as claimed in any of claims 1 to 5, wherein the metal salt of medialanic acid a) and the metal salt of anthranilic acid b) are used in a weight ratio of a) to b) of from 1:0.1 to 1:2.0.

7. A process as claimed in any of claims 1 to 6, wherein the metal salt of medialanic acid a), the metal salt of anthranilic acid b) and the polyamine c) are used in a weight ratio of a) and b) on the one hand to c) on the other hand of from 1:2.0 to 1:1.

8. A process as claimed in any of claims 1 to 7, wherein the antistatic agent comprising the substances a), b) and c) is used in amounts such that they are from 0.5 to 50 parts by weight of the antistatic agent per 1,000,000 parts by weight of homo- or copolymer of ethylene.

9. A process as claimed in any of claims 1 to 8, wherein the polymerization is carried out with the aid of a conventional Phillips catalyst.

10. An antistatic agent containing, as active substances, a mixture of
a) a metal salt of medialanic acid of the formula (I) 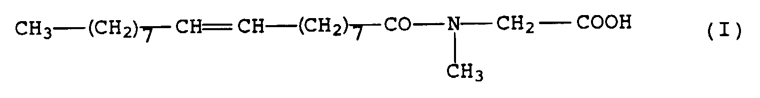
b) a metal salt of an anthranilic acid of the formula (II) 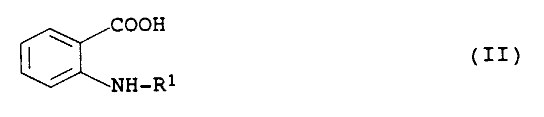 where the organic radical R¹ is either
α)
-CO-(CH₂)_{ₓ}-CH₃ (IIIα)
or
β)
-CO-(CH₂)_{y}-CH=CH-(CH₂)_{z}-CH₃ (IIIβ)
and x, y and z are each an integer and are from 6 to 18 for x, from 1 to 16 for y, from 1 to 16 for z and from 4 to 17 for y + z,
and
c) a polyamine obtainable by reacting epichlorohydrin and an aliphatic primary monoamine or an N-alkylalkylenediamine of the formula (IV)
R²NH-R³-NH₂ (IV),
where
R² is C₈-C₂₄-alkyl and
R³ is C₂-C₆-alkylene, and
wherein the metal salt of medialanic acid a), the metal salt of anthranilic acid b) and the polyamine c) are used in a weight ratio of a) and b) on the one hand to c) on the other hand of from 1:0.1 to 1:2.0.

## Revendications

1. Procédé pour la préparation d'homopolymères d'éthylène ou de copolymères de l'éthylène avec de faibles quantités d'autres alc-1-ènes en C₃ à C₁₂ par polymérisation catalytique en suspension ou en phase gazeuse en présence d'un antistatique à une température de 50 à 120°C, ainsi que sous une pression de 5 à 50 bar, caractérisé par le fait qu'on utilise comme antistatique un mélange des substances suivantes,
a) un sel métallique d'acide médialanique de formule (I) 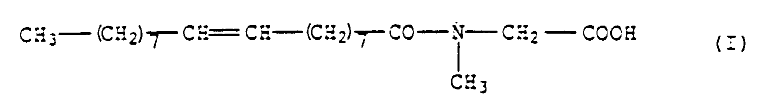
b) un sel métallique d'un acide anthranilique de formule générale (II), 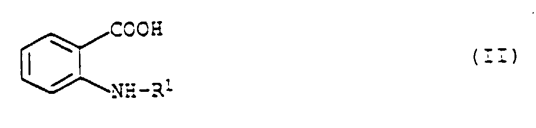 où les restes organiques R¹ représentent soit
α)
-CO-(CH₂)_{ₓ}-CH₃ (IIIα)
soit
β)
-CO-(CH₂)_{y}-CH=CH-(CH₂)_{z}-CH₃ (IIIβ)
tandis que x, y et z désignent chacun un nombre entier et compris dans l'intervalle de 6 à 18 pour x, de 1 à 16 pour y, de 1 à 16 pour z et de 4 à 17 pour y + z,
c) une polyamine, pouvant être obtenue par réaction d'épichlorhydrine avec une monoamine aliphatique primaire ou une N-alkylalkylènediamine de formule générale (IV)
R²NH-R³-NH₂ (IV),
où
R² désigne un reste alkyle en C₈-C₂₄ et
R³ désigne un reste alkylène en C₂-C₆, et
dans lequel le sel métallique d'acide médialanique a), le sel métallique d'acide anthranilique b) et la polyamine c) sont utilisés en des quantités telles que le rapport en poids entre a) et b) d'une part et c) d'autre part se situe dans l'intervalle de 1 : 0,1 à 1 : 2,0.

2. Procédé selon la revendication 1, dans lequel on utilise, comme sel métallique a) de l'acide médialanique de formule (I), le sel de calcium correspondant.

3. Procédé selon l'une des revendications 1 et 2, dans lequel on utilise, comme sel métallique b) de l'acide anthranilique de formule générale (II), le sel correspondant du chrome trivalent.

4. Procédé selon l'une quelconque des revendications 1 à 3, dans lequel on utilise, comme reste organique R¹ dans le sel métallique de l'acide anthranilique de formule générale (II), un reste organique de formule (IIIβ) dans lequel y et z représentent le nombre 7.

5. Procédé selon l'une quelconque des revendications 1 à 4, dans lequel on utilise comme polyamine c) le produit de la réaction d'épichlorhydrine et d'une N-alkylalkylènediamine de formule générale (IV) dans laquelle R² désigne un reste alkyle en C₁₂-C₁₈ et R³ désigne un reste alkylène en C₃.

6. Procédé selon l'une quelconque des revendications 1 à 5, dans lequel le sel métallique de l'acide médialanique a) et le sel métallique de l'acide anthranilique b) sont utilisés dans des proportions telles que le rapport pondéral entre a) et b) se situe dans l'intervalle de 1 : 0,1 à 1 : 2,0.

7. Procédé selon l'une quelconque des revendications 1 à 6, dans lequel le sel métallique de l'acide médialanique a), le sel métallique de l'acide anthranilique b) et la polyamine c) sont utilisés dans des proportions telles que le rapport pondéral entre a) et b) d'une part et c) d'autre part se situe dans l'intervalle de 1 : 0,2 à 1 : 1.

8. Procédé selon l'une quelconque des revendications 1 à 7, dans lequel l'antistatique choisi parmi les substances a), b) et c) est utilisé en des quantités telles que l'on ait, pour 1 000 000 de parties en poids d'homo- ou copolymère de l'éthylène, 0,5 à 50 parties en poids de l'antistatique.

9. Procédé selon l'une quelconque des revendications 1 à 8, dans lequel la polymérisation est effectuée avec l'aide d'un catalyseur de Phillips classique.

10. Antistatique, contenant comme substances actives un mélange de
a) un sel métallique d'acide médialanique de formule (I) 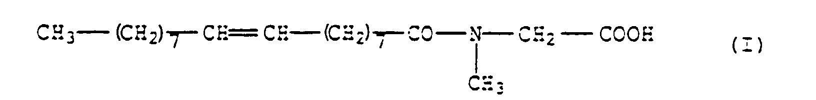
b) un sel métallique d'un acide anthranilique de formule générale (II), 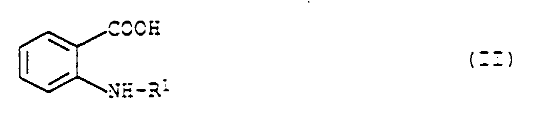 où les restes organiques R¹ représentent soit
α)
-CO-(CH₂)_{ₓ}-CH₃ (IIIα)
soit
β)
-CO-(CH₂)_{y}-CH=CH-(CH₂)_{z}-CH₃ (IIIβ)
tandis que x, y et z désignent chacun un nombre entier et compris dans l'intervalle de 6 à 18 pour x, de 1 à 16 pour y, de 1 à 16 pour z et de 4 à 17 pour y + z,
c) une polyamine, pouvant être obtenue par réaction d'épichlorhydrine avec une monoamine aliphatique primaire ou une N-alkylalkylènediamine de formule générale (IV)
R²NH-R³-NH₂ (IV),
où
R² désigne un reste alkyle en C₈-C₂₄ et
R³ désigne un reste alkylène en C₂-C₆, et
dans lequel le sel métallique d'acide médialanique a), le sel métallique d'acide anthranilique b) et la polyamine c) sont utilisés en des quantités telles que le rapport en poids entre a) et b) d'une part et c) d'autre part se situe dans l'intervalle de 1 : 0,1 à 1 : 2,0.
